# EUROPEAN PATENT SPECIFICATION

(11) **EP 2 641 754 B1**
(45) Date of publication and mention of the grant of the patent: **19.04.2017**
(21) Application number: 13159365.9
(22) Date of filing: 15.03.2013
(51) Int. Cl.: B60C 11/16

(54) **Pneumatic tire**
Pneu
Luftreifen

(30) Priority: 22.03.2012 JP 2012064646; 14.02.2013 JP 2013026409
(43) Date of publication of application: 25.09.2013
(73) Proprietor: THE YOKOHAMA RUBBER CO., LTD., Tokyo 105-8685 (JP)
(72) Inventor: Matsumoto, Kenichi, Hiratsuka City, Kanagawa 254-8601 (JP)
(74) Representative: Global IP Europe Patentanwaltskanzlei

(56) References cited:
- EP-A1- 2 583 840
- DE-A1- 1 605 508
- KR-A- 20100 090 034
- US-A- 3 693 688

## Description

### TECHNICAL FIELD

The present invention relates to a pneumatic tire provided with stud pins.

### BACKGROUND OF THE INVENTION

Conventionally, in tires for use on icy and snowy roads, stud pins are embedded in the tire tread portion (hereafter referred to as "tread portion"), to produce grip on icy road surfaces.

Normally, stud pins are embedded in holes for embedding stud pins provided in the tread portion. In this case, the stud pin is embedded tightly in the hole enlarging the hole diameter, so that the stud pin does not fall out of the hole due to acceleration, braking, or lateral forces acting from the road surface when the tire is rotating.

Under these circumstances, pneumatic stud tires having a plurality of blocks in the tread portion that are partitioned and arranged by grooves extending in the tire circumferential direction and the tire width direction into which stud pins are embedded are known in which loss of the stud pins due to tire slip when braking or acceleration or cornering is improved, so that these stud tires can maintain high performance over a long period of time (Patent Document 1).

These stud tires are pneumatic stud tires having a plurality of blocks in the tread portion that are partitioned and arranged by grooves extending in the tire circumferential direction and the tire width direction into which the stud pins are embedded. Sipes are provided in the road contact surface of the blocks, the area around the stud pins includes an area where there are no sipes, and slits around the stud pins having a depth of 3 mm to 7.5 mm extend in a linear and/or curved manner in a direction intersecting a direction radiated from the centers of the stud pins in the area without sipes.

### PRIOR ART DOCUMENT

### Patent Document

Patent Document 1: Japanese Unexamined Patent Application Publication No. 2008-230259

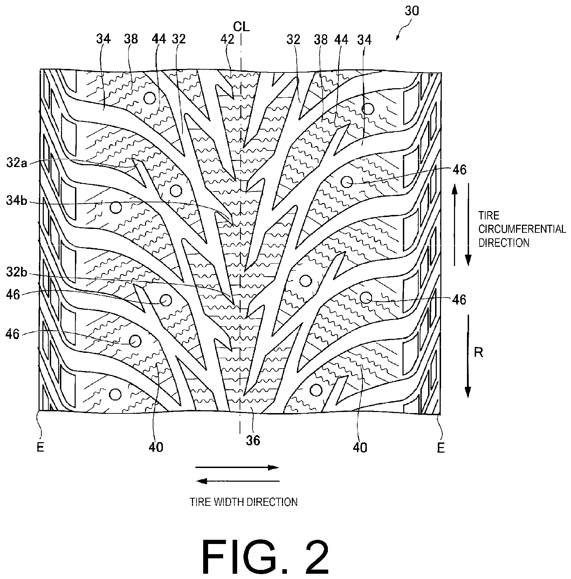

The KR 2010 0090034 A discloses an anti-skid device which is installed in the tread in which a narrow groove is provided on the side wall of a hole provided to a pillar section of the anti-skid device as illustrated in Fig. 2 to 4.

The document US 3 693 688 A discloses a studded tire having blind holes in its tread into which headed studs are fitted, with a space provided between the inner end of each stud head and the bottom of its blind hole, and passageways communicating said space to the exterior of the tread for passage of fluid from the road to the space for forming a less compressible backing for the studs when they contact a wet road surface.

The document EP-A-2583840, which is prior art according to Article 54(3) EPC, discloses a studded tire.

### SUMMARY OF THE INVENTION

### Problem to be Solved by the Invention

However, tires for use on icy and snowy roads using stud pins are used not only on icy road surfaces, but are also used on concrete road surfaces or asphalt road surfaces, which are hard road surfaces compared with icy road surfaces, so the stud pins drop out comparatively frequently.

With the pneumatic stud tire as described above, on concrete road surfaces or on asphalt road surfaces, the tire is subjected to forces from the road when braking, accelerating, or cornering, so stud pins dropping out can often occur (hereafter referred to as pin drop). Therefore, there is a demand for further improvement in pin drop with these pneumatic stud tires.

Therefore, it is an object of the present invention to provide a pneumatic tire provided with stud pins in which the performance on ice is at least maintained, and the number of stud pins that drop out is fewer compared with a conventional tire. Means to Solve the Problem

The present invention is a pneumatic tire according to claim 1. The pneumatic tire includes,
a tire tread portion provided with a plurality of holes for embedding stud pins, and
a plurality of stud pins embedded in the holes.

Each of the holes includes a hole body portion extending cylindrically in a depth direction of the holes.

A narrow groove extending in the depth direction of the holes is provided in a side wall of the hole body portion.

In this case, when "d" is a length of the narrow groove extending in the depth direction of the hole, and "D" is a length of the hole body portion extending in the depth direction of the hole, preferably d/D is not less than 0.2.

Also, a surface of the hole body portion has a cylindrical shape, and when "A" mm is the diameter of the cross-sectional shape of the hole body portion and "a" mm is a groove depth of the narrow groove, preferably a/A is from 0.1 to 0.5.

The a surface of the hole body portion has a cylindrical shape, and when "A" mm is the diameter of the cross-sectional shape of the hole body portion and "b" mm is the groove width of the narrow groove, preferably b/A is from 0.1 to 0.5.

Besides the depth direction of the hole, the direction in which the narrow groove extends may be inclined with respect to the depth direction of the holes. In this case, preferably a position of a first end portion of the narrow groove on the periphery of the side wall of the hole body portion is offset within 45 degrees of a position of a second end portion of the narrow groove on the periphery.

Likewise, in addition to the narrow groove, the side wall of the hole body portion further includes at least one other narrow groove extending in the depth direction of the holes and the number of the grooves is from 2 to 4.

Preferably a cross-sectional shape of the narrow groove is a triangular shape, a square shape, or a semi-circular arc shape.

Also, preferably the cross-section of the hole body portion is uniform, and each of the holes has a road contact surface portion on the tread surface side of the hole body portion having a cross-section that is wider than the cross-section of the hole body portion.

Also, preferably the cross-section of the hole body portion is the narrowest portion in the cross-sections of each of the holes.

### EFFECT OF THE INVENTION

With the pneumatic tire as described above, the performance on ice is at least maintained, and the number of stud pins that drop out is fewer compared with a conventional tire.

### BRIEF DESCRIPTION OF THE DRAWINGS

FIG. 1 is a tire cross-sectional view illustrating a cross-section of the pneumatic tire according to the present embodiment.
FIG. 2 is a developed plan view of a portion of the tread pattern in which the tread pattern of the pneumatic tire according to the present embodiment is developed in plan.
FIG. 3 is a view illustrating a stud pin and a hole for embedding a stud pin in the present embodiment.
FIGS. 4A and 4B are views for explaining the shape of the hole illustrated in FIG. 2.
FIGS. 5A and 5B are views illustrating a modified example of a hole for embedding a stud pin provided in the pneumatic tire according to the present embodiment.

### DETAILED DESCRIPTION

### (Overall Explanation of the Tire)

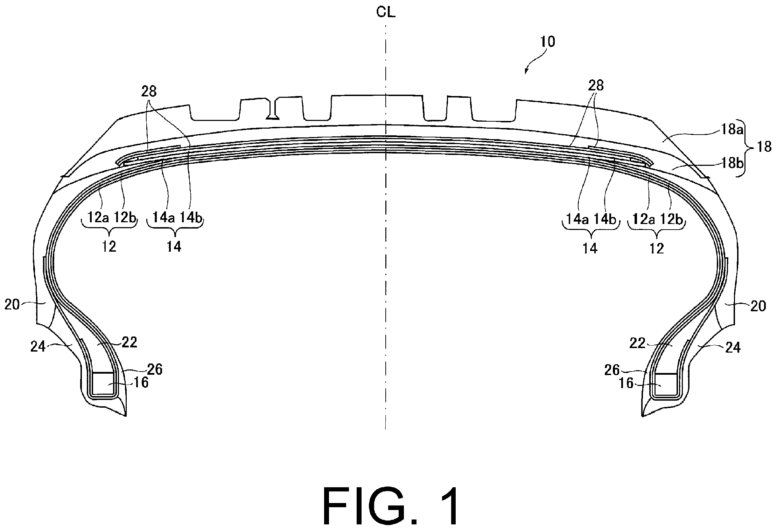

The following is an explanation of the pneumatic tire according to the present embodiment. FIG. 1 is a tire cross-sectional view illustrating a cross-section of a pneumatic tire 10 (hereafter referred to as "tire") according to the present embodiment. The tire 10 is a stud tire with stud pins embedded in the tread portion.

The tire 10 is, for example, a tire for a passenger car. Tires for passenger cars are defined in Chapter A of the JATMA YEAR BOOK 2010 (Japan Automobile Tyre Manufacturers Association, Inc.). In addition, the present embodiment can be applied to tires for small trucks as defined in Chapter B, or tires for trucks and buses as defined in Chapter C. Also, the present embodiment can be applied to tires as prescribed by the European Tyre and Rim Technical Organization (ETRTO) or the Tire and Rim Association, Inc. (TRA).

In the following, the values of the dimensions of each pattern element that is specifically explained are examples of values for a tire for a passenger car, however the pneumatic tire according to the present invention is not limited to these examples of values.

In the following explanation, the tire circumferential direction refers to the direction of rotation of the tread surface when the tire 10 is rotated about the tire rotational axis, the tire radial direction refers to the radial direction extending normal to the tire rotational axis, and the outer side in the tire radial direction refers to the side away from the tire rotational axis in the tire radial direction. The tire width direction refers to a direction parallel to the tire rotational axis direction, and the outer side in the tire width direction refers to the two sides away from the tire center line CL of the tire 10.

### (Tire Structure)

The tire 10 mainly includes, as skeletal components, a carcass ply layer 12, a belt layer 14, and a bead core 16, with a tread rubber member 18, a side rubber member 20, a bead filler rubber member 22, a rim cushion rubber member 24, and an inner liner rubber member 26 around these skeletal components.

The carcass ply layer 12 is formed in a toroidal shape wound between a pair of circular ring shaped bead cores 16, and includes rubber coated organic fiber carcass ply members 12a, 12b. In the tire 10 illustrated in FIG. 1, the carcass ply layer 12 is configured from the carcass ply members 12a, 12b, however it may also be configured from a single carcass ply member. The belt layer 14 is provided on the outer side in the tire radial direction of the carcass ply layer 12, configured from two belt members 14a, 14b. The belt layer 14 is a member made from steel cords coated with rubber and arranged at a predetermined angle to the tire circumferential direction, for example inclined at 20 to 30°, and the belt member 14a in the lower layer has a width that is wider in the tire width direction compared with the belt member 14b in the upper layer. The inclination directions of the steel cords of the two layers of the belt members 14a, 14b are in the opposite direction to each other. Therefore the belt members 14a, 14b are interlocked, and they reduce the swelling of the carcass ply layer 12 due to the inflation air pressure.

The tread rubber member 18 is provided on the outer side in the tire radial direction of the belt layer 14, and the side rubber members 20 are connected to the two ends of the tread rubber member 18 to form the side wall portion. The tread rubber member 18 is configured from two layers of rubber member, an upper tread rubber member 18a provided on the outer side in the tire radial direction and a base tread rubber member 18b provided on the inner side in the tire radial direction. The rim cushion rubber member 24 is provided at the end on the inner side in the tire radial direction of the side rubber member 20, and the rim cushion rubber member 24 contacts the rim on which the tire 10 is fitted. On the outer side in the tire radial direction of the bead core 16, the bead filler rubber member 22 which is sandwiched between the portion of the carcass ply layer 12 before it is wrapped around the bead core 16 and the portion of the carcass ply layer 12 that has been wrapped around the bead core 16 are provided. The inner liner rubber member 26 is provided on the inner surface of the tire 10 facing the tire cavity region that is filled with air that is enclosed by the tire 10 and the rim.

In addition, the tire 10 includes a belt cover layer 28 made from organic fiber covered with rubber that covers the belt layer 14 from the outer side in the tire radial direction of the belt layer 14.

The tire 10 has this tire structure, but the structure of the pneumatic tire according to the present invention is not limited to the tire structure illustrated in FIG. 1.

### (Tread Pattern)

FIG. 2 is a developed plan view of a portion of the tread pattern in which a tread pattern 30 of the tire 10 is developed in plan. As illustrated in FIG. 2, the tire 10 has a designated rotational direction R that indicates one direction in the tire circumferential direction. The direction of the rotational direction R is specified by displaying a number or symbol or the like provided on the side wall surface of the tire 10.

As illustrated in FIG. 2, the tread pattern 30 mainly includes inclined grooves 32 and lateral grooves 34.

The inclined grooves 32 are grooves that are inclined with respect to the tire circumferential direction that extend to the outer side in the tire width direction on both sides of the tire center line CL with distance in the opposite direction to the rotational direction (with distance in the upper direction in FIG. 2). The inclined grooves 32 do not reach to the pattern ends E, but terminate before reaching the pattern ends E. A plurality of inclined grooves 32 is provided at a predetermined interval in the tire circumferential direction.

The lateral grooves 34 are grooves that are inclined with respect to the tire circumferential direction, that extend on both sides of the tire center line CL towards the outer side in the tire width direction with distance in the opposite direction to the rotational direction R, and extend as far as the pattern ends E on both sides. A plurality of lateral grooves 34 is provided at a predetermined interval in the tire circumferential direction.

At the same position in the tire width direction, the inclination angle of the inclined grooves 32 with respect to the tire circumferential direction is smaller compared with the inclination angle of the lateral grooves 34 with respect to the tire circumferential direction. Therefore lateral grooves 34 intersect inclined grooves 32.

The groove width of the lateral grooves 34 and the inclined grooves 32 is, for example, from 5.0 mm to 15.0 mm, and the groove depth is from 7 to 10 mm.

The lateral grooves 34 and the inclined grooves 32 are arranged repeating at a predetermined interval, so in the center region with the tire center line CL as center, a center land portion 36 that extends continuously in the tire circumferential direction is formed partitioned by the inclined grooves 32 and the lateral grooves 34. Also, an outer side land portion 40 that includes a plurality of blocks 38 is formed in the outer side in the tire width direction of the inclined grooves 32 partitioned by the inclined grooves 32 and the lateral grooves 34. In other words, the land portion located to the outer side in the tire width direction of the center land portion 36 with the inclined grooves 32 disposed therebetween is the outer side land portion 40.

A plurality of sipes 42, 44 is provided extending in the tire width direction in the center land portion 36 and the outer side land portion 40. The sipes 42, 44 are formed with a zigzag shape in the major portions thereof, but a portion may be a straight line when viewed from outside the tread surface. There is no particular limitation on the shape of the sipes 42, 44 when viewed from outside the tread surface. Also, the sipes 42, 44 may have a 3-dimensional structure with irregularities in the width direction of the sipes in the portion to the inner side in the tire radial direction from the outer surface of the tread.

In the present embodiment, a sipe is a groove with a thickness of no more than 1.5 mm, and a depth of 5.0 to 9.0 mm, so the sipes can be distinguished from grooves such as the inclined grooves 32 and the lateral grooves 34 by their dimensions.

The inclined grooves 32 extend slanting towards the outer side in the tire width direction, with a slight curvature that is convex towards the tire center line CL. Also, the inclined grooves 32 intersect at least two lateral grooves 34. Here, "intersect" indicates that the two grooves pass through each other. In other words, each inclined groove 32 in FIG. 2 intersects two lateral grooves 34. An end 32a on the outer side in the tire width direction of the inclined groove 32 is located within the region of the outer side land portion 40 and an end 32b on the inner side in the tire width direction is located within the region of the center land portion 36. Also, the groove width of the inclined groove 32 gradually increases from the end 32a on the outer side in the tire width direction to the end 32b on the inner side.

The lateral grooves 34 extend to the outer side in the tire width direction with a slight curvature that is convex towards the direction that is on the opposite side to the rotational direction R. The lateral grooves 34 extend to the pattern ends E, and an end 34b on the inner side in the tire width direction is located in the region of the center land portion 36 or in the region of the inclined grooves 32. Here, the end 34b on the inner side in the tire width direction of the lateral grooves 34 being located within the inclined groove 32 means that the lateral groove 34 is connected to the inclined groove 32 but does not pass through the inclined groove 32. In other words, a lateral groove 34 whose end 34b is located within the region of the center land portion 36 and a lateral groove 34 whose end 34b is located within the inclined grooves 32 are disposed alternately in the tire circumferential direction. In FIG. 2, one lateral groove 34 with its end 34b located within the region of the center land portion 36 and one lateral groove 34 with its end 34b located within the inclined groove 32 are arranged alternately. However, two lateral grooves 34 with their end 34b located within the region of the center land portion 36 and one lateral groove 34 with its end 34b located within the inclined groove 32 may be arranged alternately, and one lateral groove 34 with its end 34b located within the region of the center land portion 36 and two lateral grooves 34 with their end 34b located within the inclined groove 32 may be arranged alternately.

In this way, in the tread pattern 30, a plurality of sipes 42 is provided, and the rib shaped center land portion 36 that extends continuously in the tire circumferential direction is disposed in the center region centering around the tire center line CL of the tread portion. Therefore, in the center land portion 36, unlike blocks that are arranged separated in the tire circumferential direction by grooves, the mass (blocks) of tread rubber members that are partitioned by the sipes 42 are difficult to collapse due to lateral forces or braking and acceleration forces received from the road surface. Therefore the adhesion and friction force between the road surface and tire 10 is increased so the performance on ice can be improved.

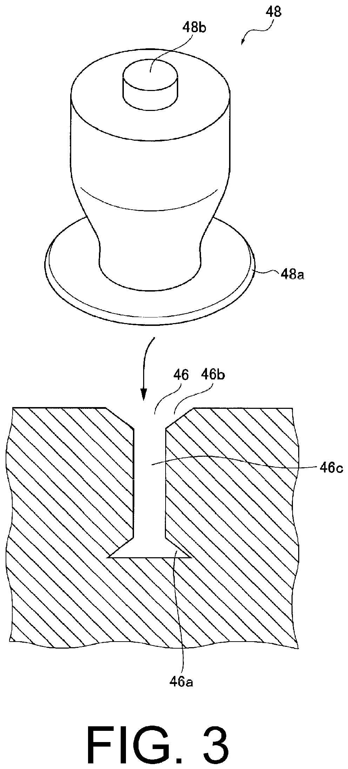

In this tread pattern 30, a plurality of holes 46 for embedding stud pins is provided in the tread surface of the outer side land portion 40 which is located to the outside in the tire width direction from the inclined grooves 32. A stud pin 48 (see FIG. 3) is embedded in each hole 46. In FIG. 2, the stud pins 48 are not illustrated, but the holes 46 are illustrated with the size of the hole enlarged associated with the embedding of the stud pins 48.

### (Stud Pin and Hole)

FIG. 3 is a view illustrating the stud pin 48 and the hole 46.

The holes 46 for embedding the stud pins 48 may be formed in advance by convex portions formed on the tire die corresponding to the holes 46 so that the holes 46 are formed as a portion of the tread pattern when vulcanizing the tire during the tire manufacturing process, or, the holes 46 may be drilled after vulcanizing the tire. The diameter of the holes 48 is small compared with the diameter of the stud pins 48, and the stud pins 48 are embedded in the holes 46 by pressing the stud pins 48 into the holes 46 using a special device that is not illustrated on the drawings.

According to the tread pattern 30 as described above, on both sides of the tire center line CL, the outer side land portion 40 is formed partitioned by the inclined grooves 32 and the lateral grooves 34, so it is possible to disperse the holes 46 in the outer side land portion 40 in the tire width direction. However, the shape of the pattern of the tread pattern 30 illustrated in FIG. 2 and the position of the holes 46 for embedding the stud pins 48 illustrated in FIG. 2 are examples, and there is no particular limitation on the shape of the tread pattern 30 and the position of the holes 46.

The positions of the holes 46 for embedding the stud pins 48 provided in the tread portion are within the region of the outer side land portion 40, and at least seven positions are set in the tire width direction, and preferably seven to ten positions are set. In this case, preferably the holes 46 are arranged dispersed at each position set in the tire width direction. In this way, the stud pins 48 embedded in the holes 46 that are dispersed in the tire width direction scratch the snow surface or the ice surface when the tire is rolling, so the acceleration and braking forces on ice are stabilized and improved.

A disk-shaped base portion 48a of the stud pin 48 illustrated in FIG. 3 is housed in a bottom portion 46a of the hole 46 by expanding the hole 46 and embedding the stud pin 48. The height of the stud pin 48 and the depth of the hole 46 are set so that when the stud pin 48 is embedded in the hole 46, a tip portion 48b of the stud pin 48 projects 0.7 to 1.2 mm from the surface of the tread portion. As illustrated in FIG. 3, the hole 46 includes from the bottom portion of the hole 46, a flange portion 46a, a body portion 46c, and a road contact surface portion 46b.

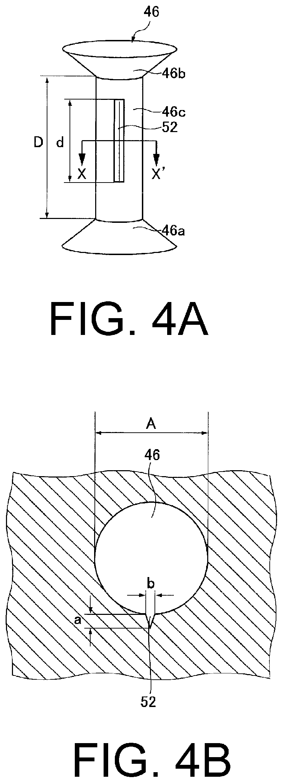

FIGS. 4A and 4B are views for explaining the shape of the hole 46 illustrated in FIG. 2. FIG. 4B is a cross-sectional view at X-X' shown in FIG. 4A.

The flange portion 46a, the body portion 46c, and the road contact surface portion 46b of the hole 46 are each circular in cross-section, and the diameter of the circular shape of the flange portion 46a and the road contact surface portion 46b increase with distance from the body portion 46c. In this way, the cross-section of the body portion 46c is uniform, and on the other hand, the road contact surface portion 46b is located on the tread surface side relative to the body portion 46c of the hole 46, and the cross-section is wide compared with the cross-section of the body portion 46c, which is desirable from the point of view of preventing the stud pin 48 from dropping out. In addition, preferably the cross-section of the body portion 46c is the narrowest portion in the cross-section in the hole 46. The base portion 48a of the stud pin 48 is inserted into the flange portion 46a. In the present embodiment, the cross-section of the flange portion 46a, the road contact surface portion 46b, and the body portion 46c are each circular.

As illustrated in FIGS. 4A and 4B, a narrow groove 52 that extends parallel to the depth direction of the hole 46 is provided in the side wall of the body portion 46c. By providing the narrow groove 52, an edge component in the side wall of the body portion 46c that contacts the surface of the stud pin 48 is formed by the narrow groove 52. Therefore, when the stud pin 48 tries to rotate relative to the side wall of this body portion 46c, the edge component that is provided in part acts to prevent this rotation. Preferably the cross-sectional shape of the narrow groove 52 is a triangular shape, a square shape, or a semi-circular arc shape. In addition it may be a U-shape, or a V-shape. However, there is no particular limitation on the cross-sectional shape of the narrow groove 52. The groove depth a of the narrow groove 52 provided in the body portion 46c is, for example, from 0.1 mm to 0.9 mm, and preferably from 0.3 to 0.7 mm. If the groove depth a of the narrow groove 52 (see FIG. 4B) is smaller than 0.1 mm, it is difficult during manufacture to provide the narrow groove 52 in the side wall of the body portion 46c. If the groove depth a of the narrow groove 52 exceeds 0.9 mm, the block rigidity in the outer side land portion 40 around the hole 46 is reduced, and it is easier for the stud pin 48 to drop out.

Also, the groove width b of the narrow groove 52 (see FIG. 4B) is, for example, from 0.1 mm to 0.9 mm, and preferably from 0.3 to 0.7 mm. If the groove width b of the narrow groove 52 is smaller than 0.1 mm, it is difficult during manufacture to provide the narrow groove 52 in the side wall of the body portion 46c. If the groove width b of the narrow groove 52 exceeds 0.9 mm, the block rigidity in the outer side land portion 40 around the hole 46 is reduced, and it is easier for the stud pin 48 to drop out.

Conventionally, stud pins that are subjected to acceleration or braking forces or lateral forces from the road surface rotate against the resistance of the friction force of the side wall of the hole in which the stud pin is embedded, so gradually it becomes easier for the stud pin to move in the outer side in the tire radial direction, until eventually the stud pin can easily drop out of the hole. Therefore, in the present embodiment, by forming the edge component to prevent the rotation of the stud pin 48 in the side wall of the body portion 46c in the hole 46 with the narrow groove 52, it becomes difficult for the stud pin 48 to drop out of the hole 46. As a result, the performance on ice is at least maintained, and can be further improved. Also, rotation of the stud pin 48 in the hole 46 is suppressed, so the number of stud pins that drop out of the hole 46 is reduced, so it is difficult for the scratching force of the stud pin 46 on the icy road surface to be reduced. Therefore, the performance on ice can be improved.

In order to efficiently prevent the stud pins 48 from dropping out of the holes 46 and improve the performance on ice, preferably d/D is not less than 0.2, when the length that the narrow groove 52 that extends in the depth direction of the hole 46 is d (see FIG. 4A), and the length that the body portion 46c extends in the depth direction of the hole 46 is D (see FIG. 4A). If d/D is less than 0.2, the edge component is reduced, and it becomes easier for the stud pins 48 to drop out of the holes 46.

Also, the surface of the body portion 46c is formed cylindrical and if the diameter of the cross-section of the body portion 46c is "A" mm, and the groove depth of the narrow groove 52 is "a" mm, then if a/A is from 0.1 to 0.5, the stud pins 48 dropping out of the holes 46 is efficiently suppressed, and the performance on ice is improved, so this is desirable. If a/A is less than 0.1, the edge component effect is reduced, and the stud pins 48 can drop out easier. If a/A exceeds 0.5, the block rigidity in the outer side land portion 40 around the hole 46 is reduced, and it is easier for the stud pin 48 to drop out.

Also, the surface of the body portion 46c is formed cylindrical, and if the diameter of the cross-section of the body portion 46c is "A" mm, and the groove width of the narrow groove 52 is "b" mm, then if b/A is from 0.1 to 0.5, the stud pins 48 dropping out of the holes 46 is efficiently suppressed, and the performance on ice is improved, so this is likewise desirable. If b/A is less than 0.1, the edge component effect is reduced, and the stud pins 48 can drop out easier. If b/A exceeds 0.5, the block rigidity in the outer side land portion 40 around the hole 46 is reduced, and it is easier for the stud pin 48 to drop out.

### (First Modified Example)

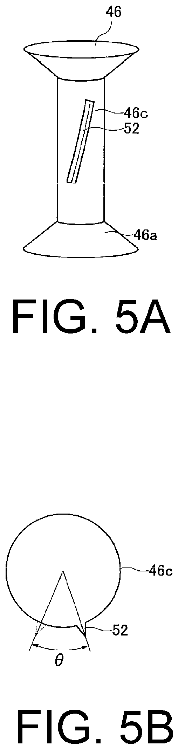

FIGS. 5A and 5B are views illustrating the shape of the hole 46 for embedding the stud pin 48 according to a first modified example.

FIG. 5B illustrates the positions on the periphery of the two end portions of the narrow groove 52 provided in the body portion 46c.

The narrow groove 52 48 illustrated in FIGS. 4A and 4B extends parallel to the depth direction of the body portion 46c, but in the present first modified example, the direction that the narrow groove 52 extends is inclined with respect to the depth direction of the body portion 46c. Also, the position on the periphery of the side wall of the body portion 46c of a first end portion of the narrow groove 52 is offset within 45 degrees of the position of a second end portion of the narrow groove 52 on the periphery. In other words, the offset θ of the positions of the two end portions of the narrow groove 52 on the periphery of the body portion 46c is not more than 45 degrees (see FIG. 5B). With this form also, the number of stud pins that drop out is fewer compared with the conventional tire, and the performance on ice is improved.

### (Second Modified Example)

Only one narrow groove 52 is provided in the body portion 46c of the hole 46 illustrated in FIGS. 4A and 4B and FIGS. 5A and 5B, however in the second modified example, at least one other narrow groove 52 is provided in addition to the narrow groove 52 in the body portion 46c of the hole 46. In this case, each narrow groove 52 may extend straight parallel to the depth direction of the hole 46, or may be inclined with respect to the depth direction of the hole 46, as illustrated in FIGS. 5A and 5B. If the narrow grooves 52 are inclined with respect to the depth direction of the hole 46, the inclination angles of the narrow grooves 52 may be different from each other. With this form also, the number of stud pins that drop out is fewer compared with the conventional tire, and the performance on ice is improved. There is no particular limitation on the number of narrow grooves 52 provided in the side wall of the body portion 46c, but as the number increases, the rigidity of the blocks of the outer side land portion 40 around the hole 46 is reduced, so it becomes easier for the stud pins 48 to drop out. Therefore, preferably the number of narrow grooves 52 provided in the side wall of the body portion 46c is from 2 to 4.

### [Examples]

To examine the effectiveness of the tire 10 according to the present embodiment, tires 10 provided with holes 46 with various dimensions in the tread portion were used to investigate the number of stud pins 48 that dropped out (resistance to pin drop) and the performance on ice (braking performance on ice) of the tire 10. To carry out the evaluation, the tires 10 were fitted to a 2000 cc class passenger car (front wheel drive car), the car was driven, and the tires were evaluated.

The tires 10 used in the evaluation had the tire structure illustrated in FIG. 1, and the tread pattern 30 illustrated in FIG. 2. Four tires each of Working Examples 1 to 19 in which the shape of the body portion 46c of the hole 46 was varied, and four tires of conventional tire were produced. The tires 10 produced had the tire size 205/55R16. The tires 10 were fitted to rims as prescribed in JATMA YEAR BOOK 2010, and the tires 10 were inflated to the air pressure corresponding to the maximum load capacity indicated in the air pressure - load capacity table in JATMA YEAR BOOK 2010. The load of the tires 10 was equivalent to two persons in a car.

There was virtually no loss of stud pins 48 from driving on the icy road surface, so after driving for 10,000 km on dry road surfaces, including asphalt road surfaces and concrete road surfaces, the number of stud pins 48 that were lost from the tread portion were counted. For the evaluation, the inverse of the number of stud pins lost was obtained, and expressed as an index with the value for the conventional example set to 100 as described later. The larger the value of the index, the fewer the number of stud pins 48 that dropped out, and the higher the resistance to pin drop.

Also, the performance on ice was determined by fully braking the car when traveling at 40 km/h on an icy road surface and measuring the braking distance several times and obtaining the average value. The evaluation was expressed as an index with the average value of the measured values for the conventional example set to 100 as described later. The larger the index value, the higher the performance on ice (braking performance).

### (Conventional Example, Working Examples 1 to 5)

The conventional example was an example in which the narrow grooves 52 were not provided in the holes for the stud pins 48. In Working Examples 1 to 4, the length D of the body portion 46c extending in the depth direction of the hole 46 was 8 mm, the diameter A of the circular shape of the cross-section of the body portion 46c was 2 mm, the groove depth a of the narrow groove 52 was 0.5 mm, and the groove width b was 0.5 mm.

The following Table 1 shows the specification of Working Examples 1 to 4 and the evaluation results for the conventional example and Working Examples 1 to 4.

**Table 1**

| | Conventional Example | Working Example 1 | Working Example 2 | Working Example 3 | Working Example 4 |
|---|---|---|---|---|---|
| Number of narrow grooves | - | 1 | 1 | 1 | 1 |
| d/D | - | 0.15 | 0.2 | 0.8 | 1 |
| a/A | - | 0.25 | 0.25 | 0.25 | 0.25 |
| b/A | - | 0.25 | 0.25 | 0.25 | 0.25 |
| Offset θ of the two end portions of the narrow groove on the periphery (degrees) | - | 0 | 0 | 0 | 0 |
| Resistance to pin drop | 100 | 102 | 104 | 106 | 106 |
| Performance on ice | 100 | 100 | 102 | 104 | 106 |

As can be seen from the evaluation results in Table 1, in each of Working Examples 1 to 4 in which the narrow groove 52 was provided, the performance on ice was at least maintained and the resistance to pin drop was improved compared with the conventional example in which the narrow groove 52 was not provided. In particular, when d/D was 0.2 or more, the resistance to pin drop and the performance on ice were improved compared with the conventional example. In this respect, preferably d/D is 0.2 or more. The upper limit of d/D is 1.0

### (Working Examples 5 to 9)

In Working Examples 5 to 9, D = 8 mm, A = 2 mm, b = 0.5 mm, d/D was fixed at 0.4 and b/A was fixed at 0.25, while a/A was varied from 0.08 to 0.52. The following Table 2 shows the specification of each working example and the evaluation results.

**Table 2**

| | Working Example 5 | Working Example 6 | Working Example 7 | Working Example 8 | Working Example 9 |
|---|---|---|---|---|---|
| Number of narrow grooves | 1 | 1 | 1 | 1 | 1 |
| d/D | 0.4 | 0.4 | 0.4 | 0.4 | 0.4 |
| a/A | 0.08 | 0.1 | 0.25 | 0.5 | 0.52 |
| b/A | 0.25 | 0.25 | 0.25 | 0.25 | 0.25 |
| Offset θ of the two end portions of the narrow groove on the periphery (degrees) | 0 | 0 | 0 | 0 | 0 |
| Resistance to pin drop | 104 | 106 | 106 | 108 | 104 |
| Performance on ice | 104 | 104 | 106 | 108 | 104 |

As can be seen from the evaluation results in Table 2, Working Examples 6 to 8 in which a/A was 0.1 to 0.5 were improved compared with Working Examples 5 and 9 in at least one of the resistance to pin drop and the performance on ice. From this, preferably a/A is from 0.1 to 0.5.

### (Working Examples 7 and 10 to 13)

In Working Examples 10 to 13, D = 8 mm, A = 2 mm, d/D was fixed at 0.4 and a/A was fixed at 0.25, while b/A was varied from 0.08 to 0.52. The following Table 3 shows the specification of each working example and the evaluation results.

**Table 3**

| | Working Example 10 | Working Example 11 | Working Example 7 | Working Example 12 | Working Example 13 |
|---|---|---|---|---|---|
| Number of narrow grooves | 1 | 1 | 1 | 1 | 1 |
| d/D | 0.4 | 0.4 | 0.4 | 0.4 | 0.4 |
| a/A | 0.25 | 0.25 | 0.25 | 0.25 | 0.25 |
| b/A | 0.08 | 0.1 | 0.25 | 0.5 | 0.52 |
| Offset θ of the two end portions of the narrow groove on the periphery (degrees) | 0 | 0 | 0 | 0 | 0 |
| Resistance to pin drop | 104 | 106 | 106 | 110 | 104 |
| Performance on ice | 104 | 104 | 106 | 108 | 104 |

As can be seen from the evaluation results in Table 3, Working Examples 7, 11, and 12 in which b/A was from 0.1 to 0.5 were improved compared with Working Examples 10 and 13 in at least one of the resistance to pin drop and the performance on ice. From this, preferably b/A is from 0.1 to 0.5.

### (Working Examples 14 to 19)

Working Examples 14 and 15 are examples as illustrated in FIGS. 5A and 5B. Working Examples 16 to 19 are examples provided with two narrow grooves 52. In each of Working Examples 14 to 19, D=8 mm, and A=2 mm. The following Table 4 shows the specification of each working example and the evaluation results.

**Table 4**

| | Working Example 14 | Working Example 15 | Working Example 16 | Working Example 17 | Working Example 18 | Working Example 19 |
|---|---|---|---|---|---|---|
| Number of narrow grooves | 1 | 1 | 2 | 2 | 2 | 2 |
| d/D | 0.4 | 0.4 | Each 0.4 | Each 0.4 | Each 0.4 | Each 0.4 |
| a/A | 0.25 | 0.25 | Each 0.25 | Each 0.25 | Each 0.1 | Each 0.5 |
| b/A | 0.25 | 0.25 | Each 0.25 | Each 0.25 | Each 0.1 | Each 0.5 |
| Offset θ of the two end portions of the narrow groove on the periphery (degrees) | 30 | -30 | 0 | 30 | 30 | 30 |
| Resistance to pin drop | 110 | 110 | 115 | 118 | 116 | 120 |
| Performance on ice | 110 | 110 | 112 | 115 | 113 | 118 |

As can be seen from the evaluation results in Table 4, for each of Working Examples 14 and 15 for which the offset θ of the positions of the end portions of the narrow grooves on the periphery was within 45 degrees, the resistance to pin drop and the performance on ice were improved. In Working Examples 16 to 19 also, which were provided with two narrow grooves 52, the resistance to pin drop and the performance on ice were improved.

From the above evaluation results, the effect of the present embodiment and its modified examples is clear.

### REFERENCE NUMERALS

- 10: Pneumatic tire
- 12: Carcass ply layer
- 12a, 12b: Carcass ply members
- 14: Belt layer
- 14a, 14b: Belt members
- 16: Bead core
- 18: Tread rubber member
- 18a: Upper tread rubber member
- 18b: Lower tread rubber member
- 20: Side wall rubber member
- 22: Bead filler rubber member
- 24: Rim cushion rubber member
- 26: Inner liner rubber member
- 28: Belt cover layer
- 30: Tread pattern
- 32: Inclined grooves
- 36: Center land portion
- 38: Block
- 40: Outer side land portion
- 42, 44: Sipe
- 46: Hole
- 46a: Bottom
- 46b: Road contact surface portion
- 46c: Body portion
- 48: Stud pin
- 48a: Base portion
- 52: narrow groove

## Claims

1. A pneumatic tire (10) comprising:
a tire tread portion provided with a plurality of holes (46) for embedding stud pins (48), and
a plurality of stud pins (48) embedded in said holes (46),
wherein each of the holes (46) includes a hole body portion (46c) extending cylindrically in a depth direction of the holes (46) wherein the cross-section of the hole body portion (46c) is circular shape and uniform, and each of the holes (46) has a road contact surface portion (46b) on the tread surface side of the hole body portion (46c) having a cross-section that is wider than the cross-section of the hole body portion (46c) and that is a circular shape having the diameter increasing with distance from the hole body portion (46c), and a flange portion (46a) on the other side of the hole body portion (46c) having a cross-section that is circular shape having the diameter of the circular shape increasing with distance from the hole body portion (46c), and
a narrow groove (52) extending in the depth direction of the holes (46) is provided in a side wall of the hole body portion (46c), in addition to the narrow groove (52), the side wall of the hole body portion (46c) further comprises at least one other narrow groove (52) extending in the depth direction of the holes (46) and the number of the grooves (52) is from 2 to 4.

2. The pneumatic tire (10) according to claim 1, wherein when "d" is a length of the narrow groove (52), extending in the depth direction of the hole (46) and "D" is a length of the hole body portion (46c), extending in the depth direction of the hole (46), d/D is not less than 0.2.

3. The pneumatic tire (10) according to claim 1 or 2, wherein a surface of the hole body portion (46c) has a cylindrical shape, and when "A" mm is the diameter of the cross-sectional shape of the hole body portion (46c) and "a" mm is a groove depth of the narrow groove (52), a/A is from 0.1 to 0.5.

4. The pneumatic tire (10) according to any one of claims 1 to 3, wherein a surface of the hole body portion (46c) has a cylindrical shape, and when "A" mm is the diameter of the cross-sectional shape of the hole body portion (46c) and "b" mm is a groove width of the narrow groove (52), b/A is from 0.1 to 0.5.

5. The pneumatic tire (10) according to any one of claims 1 to 4, wherein an extending direction of the narrow groove (52) is inclined with respect to the depth direction of the holes (46), and a position of a first end portion of the narrow groove (52) on the periphery of the side wall of the hole body portion (46c) is offset within 45 degrees of a position of a second end portion of the narrow groove (52) on the periphery.

6. The pneumatic tire (10) according to any one of claims 1 to 5, wherein a cross-sectional shape of the narrow groove (52) is triangular, rectangular, or a semicircle arc shape.

7. The pneumatic tire (10) according to any one of claims 1 to 6, wherein the cross-section of the hole body portion (46c) is the narrowest portion in the cross-section of each of the holes (46).

## Patentansprüche

1. Luftreifen (10), der Folgendes umfasst:
einen Reifenlaufflächenabschnitt, bereitgestellt mit einer Mehrzahl von Löchern (46) zum Einbetten von Stollenstiften (48), und
eine Mehrzahl von Stollenstiften (48), die in den Löchern (46) eingebettet sind,
wobei jedes der Löcher (46) einen Lochkörperabschnitt (46c) beinhaltet, der sich zylindrisch in eine Tiefenrichtung der Löcher (46) erstreckt, wobei der Querschnitt des Lochkörperabschnitts (46c) eine kreisförmige Form aufweist und einheitlich ist und jedes der Löcher (46) einen Straßenkontaktoberflächenabschnitt (46b) auf der
Laufflächen-Oberflächenseite des Lochkörperabschnitts (46c) mit einem Querschnitt aufweist, der breiter ist als der Querschnitt des Lochkörperabschnitts (46c), und der eine kreisförmige Form mit einem Durchmesser aufweist, der mit dem Abstand vom Lochkörperabschnitt (46c) ansteigt, und einen Flanschabschnitt (46a) an der anderen Seite des Lochkörperabschnitts (46c) mit einem Querschnitt, der eine kreisförmige Form mit dem Durchmesser der kreisförmigen Form, die mit dem Abstand vom Lochkörperabschnitt (46c) ansteigt, aufweist, und
wobei eine schmale Rille (52), die sich in der Tiefenrichtung der Löcher (46) erstreckt, an einer Seitenwand des Lochkörperabschnitts (46c) zusätzlich zur schmalen Rille (52) bereitgestellt ist, wobei die Seitenwand des Lochkörperabschnitts (46c) darüber hinaus mindestens eine weitere schmale Rille (52) umfasst, die sich in die Tiefenrichtung der Löcher (46) erstreckt, und wobei die Anzahl der Rillen (52) zwischen 2 und 4 ist.

2. Luftreifen (10) gemäß Anspruch 1, wobei, wenn "d" einer Länge der schmalen Rille (52) entspricht, die sich in die Tiefenrichtung des Lochs (46) erstreckt, und "D" einer Länge des Lochkörperabschnitts (46c) entspricht, die sich in die Tiefenrichtung des Lochs (46) erstreckt, d/D nicht weniger als 0,2 ist.

3. Luftreifen (10) gemäß Anspruch 1 oder 2, wobei eine Oberfläche des Lochkörperabschnitts (46c) eine zylindrische Form aufweist, und wenn "A" mm der Durchmesser der Querschnittsform des Lochkörperabschnitts (46c) und "a" mm eine Rillentiefe der schmalen Rille (52) ist, a/A zwischen 0,1 und 0,5 liegt.

4. Luftreifen (10) gemäß einem der Ansprüche 1 bis 3, wobei eine Oberfläche des Lochkörperabschnitts (46c) eine zylindrische Form aufweist, und wenn "A" mm der Durchmesser der Querschnittsform des Lochkörperabschnitts (46c) und "b" mm eine Rillenbreite der schmalen Rille (52) ist, b/A zwischen 0,1 und 0,5 liegt.

5. Luftreifen (10) gemäß einem der Ansprüche 1 bis 4, wobei eine sich erstreckende Richtung der schmalen Rille (52) in Bezug auf die Tiefenrichtung der Löcher (46) geneigt ist und eine Position eines ersten Endabschnitts der schmalen Rille (52) am Umfang der Seitenwand des Lochkörperabschnitts (46c) innerhalb 45 Grad einer Position eines zweiten Endabschnitts der schmalen Rille (52) am Umfang ausgeglichen ist.

6. Luftreifen (10) gemäß einem der Ansprüche 1 bis 5, wobei eine Querschnittsform der schmalen Rille (52) dreieckig, rechteckig, oder von einer halbkreisförmigen Bogenform ist .

7. Luftreifen (10) gemäß einem der Ansprüche 1 bis 6, wobei der Querschnitt des Lochkörperabschnitts (46c) der engste Abschnitt im Querschnitt jedes der Löcher (46) ist.

## Revendications

1. Bandage pneumatique (10) comprenant :
une partie bande de roulement de bandage comprenant une pluralité de trous (46) pour intégrer des broches goujonnées (48) et
une pluralité de broches goujonnées (48) intégrées dans lesdits trous (46), dans lequel chacun des trous (46) comprend une partie de corps de trou (46c) s'étendant de façon cylindrique dans une direction de la profondeur des trous (46), dans lequel la coupe transversale de la partie de corps de trou (46c) est de forme circulaire et uniforme et chacun des trous (46) présente une partie surface de contact avec la route (46b) sur le côté surface bande de roulement de la partie de corps de trou (46c) ayant une coupe transversale qui est plus large que la coupe transversale de la partie de corps de trou (46c) et qui est de forme circulaire ayant son diamètre croissant avec la distance depuis la partie de corps de trou (46c) et une partie de rebord (46a) sur l'autre côté de la partie de corps de trou (46c) ayant une coupe transversale de forme circulaire ayant son diamètre de la forme circulaire croissant avec la distance depuis la partie de corps de trou (46c) et
une rainure étroite (52) s'étendant dans la direction de la profondeur des trous (46) est prévue dans une paroi latérale de la partie de corps de trou (46c), en plus de la rainure étroite (52), la paroi latérale de la partie de corps de trou (46c) comprend en outre au moins une autre rainure étroite (52) s'étendant dans la direction de la profondeur des trous (46) et le nombre des rainures (52) va de 2 à 4.

2. Bandage pneumatique (10) selon la revendication 1, dans lequel lorsque «d» est une longueur de la rainure étroite (52), s'étendant dans la direction de la profondeur du trou (46) et « D » est une longueur de la partie de corps de trou (46c), s'étendant dans la direction de la profondeur du trou (46), d/D n'est pas inférieur à 0,2.

3. Bandage pneumatique (10) selon la revendication 1 ou 2, dans lequel une surface de la partie de corps de trou (46c) a une forme cylindrique et lorsque « A » mm est le diamètre de la forme en coupe transversale de la partie de corps de trou (46c) et «a» mm est une profondeur de rainure de la rainure étroite (52), a/A va de 0,1 à 0,5.

4. Bandage pneumatique (10) selon l'une quelconque des revendications 1 à 3, dans lequel une surface de la partie de corps de trou (46c) a une forme cylindrique et lorsque « A » mm est le diamètre de la forme en coupe transversale de la partie de corps de trou (46c) et « b » mm est une largeur de rainure de la rainure étroite (52), b/A va de 0,1 à 0,5.

5. Bandage pneumatique (10) selon l'une quelconque des revendications 1 à 4, dans lequel une direction d'extension de la rainure étroite (52) est inclinée par rapport à la direction de la profondeur des trous (46) et une position d'une première partie d'extrémité de la rainure étroite (52) sur la périphérie de la paroi latérale de la partie de corps de trou (46c) est décalée de jusqu'à 45 degrés d'une position d'une seconde partie d'extrémité de la rainure étroite (52) sur la périphérie.

6. Bandage pneumatique (10) selon l'une quelconque des revendications 1 à 5, dans lequel une forme en coupe transversale de la rainure étroite (52) est une forme triangulaire, rectangulaire ou d'arc en demi-cercle.

7. Bandage pneumatique (10) selon l'une quelconque des revendications 1 à 6, dans lequel la coupe transversale de la partie de corps de trou (46c) est la partie la plus étroite dans la coupe transversale de chacun des trous (46).
